# EUROPÄISCHE PATENTSCHRIFT

(11) **EP 1 238 270 B1**
(45) Veröffentlichungstag und Bekanntmachung des Hinweises auf die Patenterteilung: **22.07.2009**
(21) Anmeldenummer: 00981311.4
(22) Anmeldetag: 27.11.2000
(51) Int. Cl.: G01N 29/26, G01N 29/04

(54) **VERFAHREN ZUR ULTRASCHALLPRÜFUNG EINER SCHWEISSNAHT EINES GESCHWEISSTEN TURBINENLÄUFERS**
ULTRASONIC TESTING METHOD FOR A WELD SEAM OF A WELDED TURBINE ROTOR
PROCEDE DE TEST ULTRASONORE D'UNE SOUDURE DE ROTOR DE TURBINE SOUDE

(30) Priorität: 15.12.1999 EP 99125029
(43) Veröffentlichungstag der Anmeldung: 11.09.2002
(73) Patentinhaber: SIEMENS AKTIENGESELLSCHAFT, 80333 München (DE)
(72) Erfinder: LOHMANN, Hans-Peter, 46485 Wesel-Obrighoven (DE)
(86) Internationale Anmeldenummer: PCT/EP2000/011839
(87) Internationale Veröffentlichungsnummer: WO 2001/044799

(56) Entgegenhaltungen:
- DE-A- 2 628 620
- DE-A- 19 512 176
- FR-A- 2 775 787
- US-A- 4 012 946

## Beschreibung

Die Erfindung betrifft ein Verfahren zur Ultraschallprüfung einer Schweißnaht eines entlang einer Läuferachse gerichteten, geschweißten Turbinenläufers, bei dem durch die Schweißnaht senkrecht zur Läuferachse ein erster Läuferteil mit einem zweiten Läuferteil entlang einer sich ringförmig um den Läufer erstreckenden Schweißfläche unter Einschluß eines Hohlraumes verschweißt ist.

In dem Buch J. Krautkrämer et al.: "Werkstoffprüfung mit Ultraschall", 1980, Springer Verlag, Berlin, 4. Auflage, Seite 485-486 - ist ein Verfahren zur Prüfung von geraden Schweißnähten mittels Ultraschall beschrieben, in dem ein Ultraschallsender und ein Ultraschallempfänger auf der selben Seite der Schweißnaht angeordnet ist und vom Ultraschallsender ein Ultraschallstrahl in Richtung der Schweißnaht gesendet wird. Durch einen vorhandenen Materialfehler wird der Ultraschallstrahl in der Scheißnaht reflektiert. Die Empfangscharakteristik des Ultraschallempfängers ist so ausgerichtet, dass der im Fehlerfall reflektierte Ultraschallstrahl vom Ultraschallempfänger aufgenommen werden kann. Der Ultraschallsender und Ultraschallempfänger sind an jeweils einer Stelle auf der Werkstoffoberfläche ortsfest fixiert und durch Drehung um die eigene Achse, die parallel zur Werkstoffoberflächennormalen ausgerichtet ist, bewegbar. Die Schweißnaht wird durch Drehen des Ultraschallsenders und Ultraschallempfängers abgetastet.

In dem Buch "Werkstoffprüfung mit Ultraschall", J. und H. Krautkrämer, Springer Verlag Berlin, 1986, ist auf den Seiten 110-111 beschrieben, wie ein Werkstückbereich unter Ausnutzung der Reflexion an einer internen Fläche im Werkstück durch einen Sendeprüfkopf und einen Empfangsprüfkopf mittels Ultraschall untersucht werden kann. Bei einander gegenüberliegenden Außenseiten des Werkstückes werden die Prüfköpfe einander gegenüberliegend auf diesen Außenseiten angeordnet. Der Sendeprüfkopf sendet das Ultraschallsignal zu der zu untersuchenden Fläche. Von dort wird es zum Empfangsprüfkopf reflektiert. Eine weitere Möglichkeit der Untersuchung ist das Tandemverfahren, bei dem beide Prüfköpfe hintereinander auf der gleichen Außenseite angeordnet sind. Hierbei wird eine Werkstückrückseite für eine zweite Reflexion ausgenutzt. Ist nur eine zugängliche Außenseite des Werkstückes vorhanden und gibt es zudem keine geeignete Rückseite für die zusätzliche Reflexion nach dem Tandemverfahren, so ist keines der beschriebenen verfahren anwendbar.

Aufgabe der Erfindung ist die Angabe eines Verfahrens zur Ultraschallprüfung einer Schweißnaht eines Turbinenläufers, das eine quantitative Abschätzung von Materialfehlerausdehnungen in der Schweißnaht ermöglicht.

Erfindungsgemäß wird diese Aufgabe gelöst durch ein Verfahren gemäß Anspruch 1.

Ein geschweißter Turbinenläufer ist aus Läuferteilen zusammengeschweißt, die jeweils an ihrer Schweißflanke einen ringförmigen Ansatz aufweisen, der üblicherweise in radialer Richtung nach innen auch noch einen Entlastungswulst für die mechanische Entlastung der Schweißnahtwurzel aufweist. Die stark gekrümmte Geometrie der radial innenliegenden Fläche der Schweißansätze der Läuferteile führt dazu, daß im Schweißnahtbereich keine Rückwand vorliegt, die mit Ausnutzung der Tandemtechnik zur Ultraschallprüfung der Schweißnaht benutzt werden könnte. Da zudem die der Läuferoberfläche gegenüberliegende Innenseite nicht zugänglich ist, da sie unter Bildung des Hohlraumes verschweißt ist, ist keines der oben beschriebenen Reflexionsverfahren zur quantitativen Fehleranalyse anwendbar. Bisher beschränkte sich daher eine Ultraschallprüfung der Schweißnaht auf eine rein qualitative Aussage mittels eines einzigen einschalligen Prüfkopfes, der mit einer Impuls-Echotechnik das Vorhandensein möglicher Materialfehler anzeigen konnte. Für eine Aussage über die tatsächliche Güte der Schweißnaht reicht aber eine solche qualitative Aussage nicht aus. Um eine Bruchgefahr sicher ausschließen zu können ist es notwendig, einen Materialfehler hinsichtlich seiner Ausdehnung zu charakterisieren und zu bewerten. Durch die Erfindung wird dies erstmals möglich. Unter Ausnutzung der Rotationssymmetrie des Turbinenläufers kommt eine Sender-Empfänger-Technik mit zwei Prüfköpfen zum Einsatz, obwohl weder eine geeignete Reflektionsrückwand zur Verfügung steht und obwohl die Innenseite des Turbinenläufers, also der Hohlraum nach der Verschweißung nicht mehr zugänglich ist. Die Prüfköpfe werden dazu auf der Läuferoberfläche symmetrisch zur Läuferachse angeordnet. Die Meßpositionen der Prüfköpfe spannen somit zusammen mit dem Einschallpunkt auf der Schweißnaht eine Ebene auf, die parallel zur Läuferachse und somit senkrecht zur Schweißnaht verläuft. Ein Winkel zwischen dem einfallenden Ultraschallsignal und einer Nomalen auf die Schweißfläche ist somit gleich dem Ausfallswinkel des Ultraschallsignales zu dieser Normalen. Wie bei einer ansich bekannten Spiegeltechnik ist es in dieser definierten Geometrie möglich, eine Fehlerbewertung eines georteten Materialfehlers vorzunehmen. Völlig neuartig ist hierbei aber, daß nicht wie bei der üblichen Spiegeltechnik die Prüfköpfe auf zwei einander gegenüberliegenden Flächen des Prüfkörpers angeordnet werden. Unter Ausnutzung der Rotationssymmetrie des Turbinenläufers wird eine Spiegeltechnik überraschenderweise durch Anordnung der Prüfköpfe auf der gleichen Fläche des Bauteils, also auf der Läuferoberfläche, anwendbar.

Der Ultraschallsender und der Ultraschallempfänger werden unter Beibehaltung ihrer symmetrischen Anordnung zur Läuferachse auf der Läuferoberfläche so verfahren, daß schrittweise die gesamte Schweißnaht dem Ultraschallsignal ausgesetzt wird. Durch die beschriebene Anordnung der Prüfköpfe ist es durch eine geeignete Lageveränderung möglich, die gesamte Schweißnaht zu prüfen. Hierzu werden die Prüfköpfe in Umfangsrichtung bewegt, also aufeinander zu oder voneinander weg. Dies führt zu einer Abtastung der Schweißnahttiefe. Weiterhin werden die Prüfköpfe in Umfangsrichtung unter Beibehaltung ihres Abstandes bewegt. Dies dient einer Abtastung des Schweißnahtumfangs. Ein weiterer Parameter für die Prüfkopfbewegung ist eine Bewegung in axialer Richtung, d.h. die Prüfköpfe werden ohne Abstandsänderungen entlang der Läuferachse verschoben. Dies dient einer Abtastung der Schweißnahtdicke. Durch eine geeignete Abfolge und Kombination dieser Bewegungsarten wird schrittweise die gesamte Schweißnahtfläche beschallt und geprüft.

Vorzugsweise ist der Ultraschallsender auch als Ultraschallempfänger ausgelegt, wobei der Ultraschallsender in einem zusätzlichen, gegebenenfalls aber gleichzeitig durchgeführten Prüfschritt ein Impuls-Signal sendet und dessen Echo empfängt. Diese zusätzliche Impuls-Echotechnik des Ultraschallsenders kann sequenziell zur Sendeempfangstechnik, wie oben beschrieben, erfolgen oder auch bei einem als Mehrkanalprüfgerät ausgebildeten Schallsender parallel zur Sende-Empfangstechnik. Durch die zusätzliche Impuls-Echotechnik werden Informationen über einen eher voluminösen oder eher flächigen Charakter des Materialfehlers gewonnen. Zusammen mit den Aussagen über die flächige Ausdehnung des Materialfehlers, welche über die Sendeempfangstechnik wie oben beschrieben gewonnen wird, ist hierdurch eine weitere Präzisierung der quantitativen Aussagen über den Materialfehler möglich. Vorzugsweise ist in gleicher Weise der Ultraschallempfänger auch als Ultraschallsender ausgelegt.

Vorzugsweise sind der Ultraschallempfänger und/oder der Ultraschallsender als Gruppenstrahler ausgebildet, so daß verschiedene Empfangswinkel bzw. Einstrahlwinkel für das Ultraschallsignal elektronisch einstellbar sind.

Die Ortung eines Materialfehlers in der Schweißnaht legt jeweilige zugeordnete Fehlerpositionen des Ultraschallsenders und des Ultraschallempfängers fest. Die jeweiligen Fehlerpositionen sind jene Positionen des Ultraschallsenders und des Ultraschallempfängers, die diese bei Ortung eines Materialfehlers einnehmen. Bevorzugt werden der Ultraschallsender oder der Ultraschallempfänger lokal um ihre jeweilige Fehlerposition herum bewegt. Dabei wird aus der sich durch diese lokalen Verschiebungen folgenden Änderung des Fehlersignals zusätzlich zur Quantifizierung der Materialfehlerausdehnung eine Orientierung des Materialfehlers bestimmt. Mit anderen Worten: Die Ortung und Bewertung der flächigen Ausdehnung eines Meßfehlers erfolgt zunächst wie zuvor beschrieben. Um zusätzlich eine Information über die Orientierung eines flächigen Materialfehlers zu gewinnen, werden nun der Ultraschallempfänger oder der Ultraschallsender um die Fehlerposition, in der das Fehlersignal geortet wurde, bewegt und dabei ein Ultraschallsignal unter unterschiedlichen Winkeln empfangen bzw. gesendet. In diesem Fall gilt also nicht mehr die strenge Symmetrie der Prüfkopfanordnung zur Läuferachse und damit die genau Spiegelsymmetrie für das gesendete und empfangene Ultraschallsignal. Durch das lokale Ändern der Winkelverhältnisse um die zentrale Fehlerposition herum wird eine Information gewonnen, wie ein flächiger Materialfehler gegenüber der Schweißfläche orientiert ist. Somit wird eine weitere Verfeinerung der Fehlerbewertung erreicht.

Bevorzugt wird das Verfahren bei einem Turbinenläufer angewandt, bei dem der erste Läuferteil aus einem anderen Material besteht als der zweite Läuferteil. Gerade bei solchen Materialpaarungen, kann es in der Schweißnaht zu Materialfehlern kommen, die als bedenklich hinsichtlich der Festigkeit der Schweißverbindung zu werten sind. Gerade hier ist also eine quantitative Bewertung eines Materialfehlers von besonderer Bedeutung.

Vorzugsweise ist die Schweißnaht eine Engspaltschweißnaht.

Bevorzugtermäßen ist der Turbinenläufer als ein Dampfturbinenläufer ausgebildet.

Die Erfindung wird beispielhaft anhand der Zeichnungen näher erläutert. Es zeigen, teilweise schematisch und nicht maßstäblich:
Figur 1 einen Längsschnitt eines Teils eines geschweißten Dampfturbinenläufers,
Figur 2 eine perspektivische Darstellung einer Ultraschallprüfung einer Schweißnaht eines geschweißten Turbinenläufers,
Figur 3 und Figur 4 eine Auf- bzw. Seitenansicht der Darstellung aus Figur 2 und
Figur 5 eine Darstellung zur Veranschaulichung der Ermittlung einer Materialfehlerorientierung.

Gleiche Bezugszeichen haben in den verschiedenen Figuren die gleiche Bedeutung.

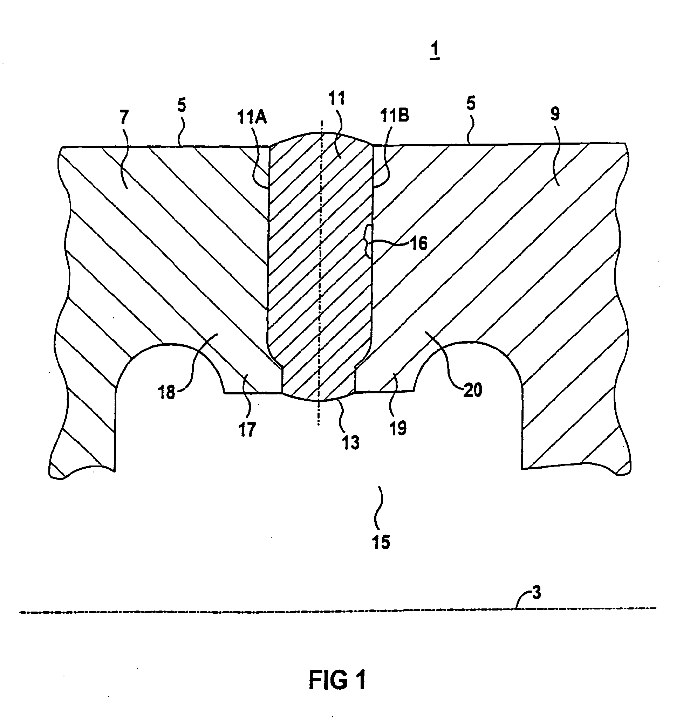

Figur 1 zeigt einen Ausschnitt eines Längsschnittes durch einen Dampfturbinenläufer 1. Der Dampfturbinenläufer 1 ist entlang einer Turbinenachse 3 gerichtet und weist eine Läuferoberfläche 5 auf. Ein erstes Läuferteil 7 ist mit einem zweiten Läuferteil 9 mit einer Schweißnaht 11 verschweißt. Die Schweißnaht 11 verläuft entlang einer ringförmigen Schweißfläche 13. Die Schweißnaht 11 liegt zwischen einem Schweißansatz 18 des ersten Läuferteiles 7 und einem Schweißansatz 20 des zweiten Läuferteiles 9. Die Schweißansätze 18,20 verlaufen ringförmig um den Umfang des jeweiligen Läuferteiles 7,9. Die Schweißansätze 18,20 weisen jeweils an ihrem radial innenliegenden Bereich einen Entlastungswulst 17,19 auf. Diese Entlastungswülste 17,19 dienen einer mechanischen Entlastung der radial innenliegenden Wurzel der Schweißnaht 11. Angrenzend zum ersten Läuferteil 7 weist die Schweißnaht 11 eine erste Schweißnahtflanke 11a auf. Angrenzend zum zweiten Läuferteil 9 weist die Schweißnaht 11 eine zweite Schweißnahtflanke 11b auf. Gerade im Bereich der Schweißnahtflanken 11a,11b kann es zu Materialfehlern kommen, die eine Rißausbildung begünstigen und im schlimmsten Falle zu einem Bruch der Schweißverbindung führen können. Eine Prüfung der Schweißnaht 11 auf solche Materialfehler 16 ist daher notwendig. Dabei reicht es nicht aus, eine bloße Existenz eines Materialfehlers 16 nachzuweisen, da die Gefahr einer Rißausbreitung stark von der Größe und Form des Materialfehlers 16 abhängt und etwa bei flächigen Materialfehlern 16 sehr viel größer ist als bei blasenartigen Materialfehlern 16. Aufgrund der Geometrie der Läuferteile 7,9 im Bereich der Schweißverbindung ist es aber nicht möglich, konventionelle Techniken der Ultraschallprüfung anzuwenden, bei denen eine quantitative Bewertung der Materialfehler 16 möglich wäre. Ein unmittelbar senkrechtes Einschallen ist aufgrund der Ausdehnung der Läuferteile 7,9 nicht möglich. Eine Spiegeltechnik mittels zweier sich gegenüberliegender Prüfköpfe einerseits auf der Läuferoberfläche 5 und andererseits auf der dem durch das Schweißen gebildeter Hohlraum 15 zugewandten Oberfläche ist ebenfalls nicht möglich, da der Hohlraum 15 nach der Verschweißung unzugänglich ist. Eine Tandemprüftechnik mittels zweier hintereinander auf der Läuferoberfläche 5 angeordneter Prüfköpfe ist auch ausgeschlossen, da keine geeignete Rückwand für eine für die Tandemtechnik notwendige Reflektion zur Verfügung steht. Bisher mußte man sich somit damit begnügen, mit einer Impuls-Echoprüftechnik eines einzigen, über die Läuferoberfläche 5 einschallenden Prüfkopfes die bloße Existenz von Materialfehlern 16 nachzuweisen. Anhand der folgenden Figuren wird erläutert, wie doch eine bewertende Ultraschallprüfung der Schweißnaht 11 erfolgen kann.

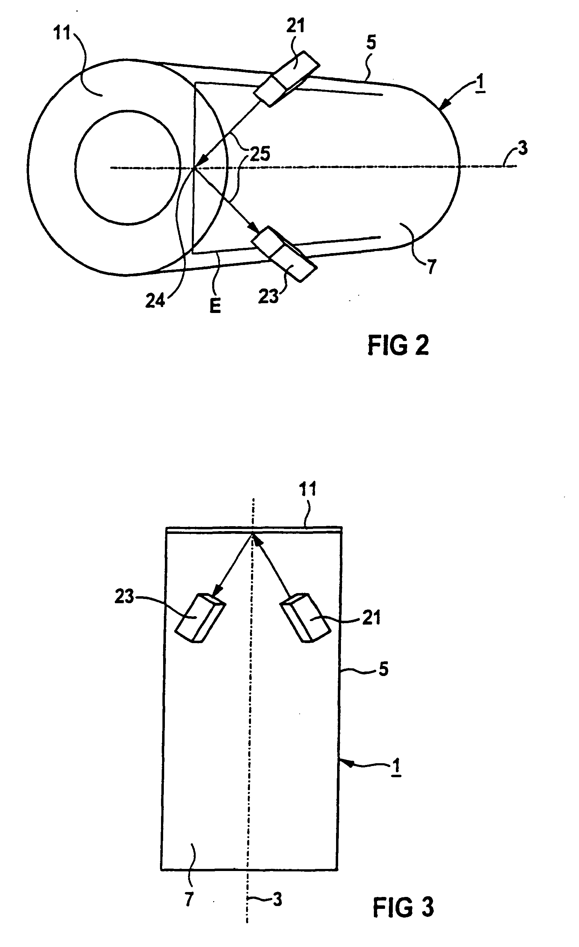

Figur 2 zeigt in einer perspektivischen Darstellung ein erstes Läuferteil 7 mit an einer Kopfseite befindlichen, ringförmigen Schweißnaht 11. Das zweite Läuferteil 9, welches mit der Schweißnaht 11 dem ersten Läuferteiles 7 verschweißt ist, ist für eine bessere Übersichtlichkeit nicht dargestellt. Auf der Läuferoberfläche 5 des ersten Läuferteiles 7 ist ein Ultraschallsender 21 angeordnet. Symmetrisch zur Läuferachse 3 ist ebenfalls auf der Läuferoberfläche 5 des ersten Läuferteiles 7 ein Ultraschallempfänger 23 angeordnet. Mit dem Ultraschallsender 21 wird ein Ultraschallsignal 25 auf die Schweißnaht 11 gestrahlt. Vom Auftreffpunkt 24 des Ultraschallsignals 25 auf der Schweißnaht 11 wird das Ultraschallsignal 25 zum Ultraschallempfänger 23 reflektiert. Die Auflagepunkte des Ultraschallsenders 21 und des Ultraschallempfängers 23 auf der Läuferoberfläche 5 liegen in einer gemeinsamen Ebene mit dem Auftreffpunkt 24. Die gemeinsam aufgespannte Ebene E ist parallel zur Läuferachse 3 orientiert. Durch diese modifizierte Spiegeltechnik wird unter Ausnutzung der Krümmung der Läuferoberfläche 5 eine Prüftechnik bereitgestellt, mit der aufgrund der definierten Winkelverhältnisse eine Bewertung eines Materialfehlers hinsichtlich einer Ausdehnung möglich ist.

In Figur 3 ist die Anordnung des Ultraschallsenders 21 und des Ultraschallempfängers 23 symmetrisch zur Läuferachse 3 in einer Aufsicht der Anordnung aus Figur 2 dargestellt.

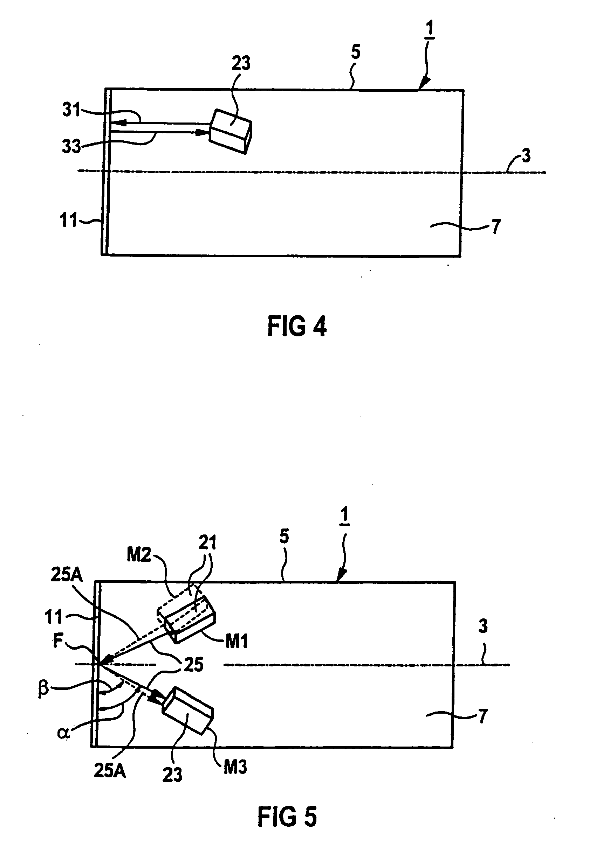

Figur 4 zeigt eine Seitenansicht der Anordnung aus Figur 2. Hier ist nur der Ultraschallempfänger 23 sichtbar. Dieser ist gleichzeitig auch als ein Ultraschallsender ausgebildet. Mit dieser Sendereigenschaft sendet der Ultraschallempfänger 23 ein Impulssignal 31 zur Schweißnaht 11. Ein rückgestreutes Echosignal 33 wird wiederum durch den Ultraschallempfänger 23 empfangen. Mittels dieser Impuls-Echomethode kann ein Materialfehler 16 zusammen mit dem wie zu Figur 2 beschriebenen Verfahren gewonnen Ergebnisse hinsichtlich seiner Fehlerart, d.h. ob es sich um einen eher voluminösen oder eher flächigen Fehler handelt, beurteilt werden. In gleicher Weise ist auch der Ultraschallsender 21 zusätzlich als ein Ultraschallempfänger ausgebildet. Die Impuls-Echomethode kann bei einer mehrkanaligen Ausführungsform des Ultraschallsenders 21 bzw. des Ultraschallsenders 23 parallel zur Sendeempfangstechnik, wie in Figur 2 beschrieben, durchgeführt werden.

Figur 5 zeigt ein zusätzliches Verfahren zur Verfeinerung der Bewertung des Materialfehlers 16. In einer Aufsicht auf eine der Figur 2 entsprechenden Anordnung sind ein Ultraschallsender 21 und ein Ultraschallempfänger 23 in jeweiligen Meßpositionen M1,M2 dargestellt, in der an einer Fehlerposition F ein Materialfehler 16 detektiert wurde. In dem nun der Ultraschallsender durch Variation einer zusätzlichen Meßposition M2 um die Meßposition M1 herumbewegt wird, wird ein weiteres Ultraschallsignal 25a unter unterschiedlichen Winkeln auf die Fehlerposition F gesendet. Das reflektierte Signal 25a weist also einen Winkel beta gegenüber der Schweißnaht 11 auf, der unterschiedlich ist gegenüber einem Winkel alpha des in Symmetrieposition eingestrahlten Ultraschallsignals 25. Damit verändert sich die Signalhöhe im Ultraschallempfänger 23 abhängig von der zusätzlichen Meßposition M2 des Ultraschallsenders 21 und abhängig von einer Orientierung des Materialfehlers 16. Hierdurch werden Informationen über diese Orientierung des Materialfehlers 16 gewonnen.

Mit den beschriebenen Meßtechniken ist natürlich die gesamte Schweißnaht 11 prüfbar. Hierzu werden der Ultraschallsender 21 und der Ultraschallempfänger 23 unter Beibehaltung ihrer symmetrischen Anordnung zur Turbinenachse 3 verschoben. Dies kann bei konstantem Abstand zwischen Ultraschallsender 21 und Ultraschallempfänger 23 entlang einer Umfangsrichtung um den Turbinenläufer 1 oder auch parallel zur Turbinenachse 3 geschehen. Der Ultraschallsender 21 und der Ultraschallempfänger 23 können aber auch aufeinander zu oder voneinander weg bewegt werden.

## Patentansprüche

1. Verfahren zur Ultraschallprüfung einer Schweißnaht (11) eines entlang einer Läuferachse (3) gerichteten, geschweißten Turbinenläufers (1) mit einer Läuferoberfläche (5), bei dem durch die Schweißnaht (11) senkrecht zur Läuferachse (3) ein erster Läuferteil (7) mit einem zweiten Läuferteil (9) entlang einer sich ringförmig um den Läufer erstreckenden Schweißfläche (13) unter Einschluß eines Hohlraumes (15) verschweißt ist, wobei
ein Ultraschallsender (21) und ein Ultraschallempfänger (23) auf der Läuferoberfläche (5) im Bereich des ersten Läuferteiles (7) symmetrisch zur Läuferachse (3) angeordnet werden und anschließend ein Ultraschallsignal (25) vom Ultraschallsender (21) zur Schweißnaht (11) gesendet und von einem dort vorliegenden Materialfehler (16) zum Ultraschallempfänger (23) reflektiert wird, wobei
die Meßpositionen des Ultraschallsenders (21) und Ultraschallempfängers (23) zusammen mit dem Einschallpunkt auf der Schweißnaht (11) eine Ebene spannen, die parallel zur Läuferachse (3) und somit senkrecht zur Schweißnaht (11) verläuft, wobei
der Ultraschallsender (21) und der Ultraschallempfänger (23) unter Beibehaltung ihrer symmetrischen Anordnung zur Läuferachse (3) auf der Läuferoberfläche (5) so verfahren werden, daß schrittweise die gesamte Schweißnaht (11) dem Ultraschallsignal (25) ausgesetzt wird, wobei
der Ultraschallsender (21) und der Ultraschallempfänger (23) in Umfangsrichtung aufeinander zu oder voneinander weg bewegt werden, in Umfangsrichtung unter Beibehaltung ihres Abstandes bewegt werden oder entlang der Läuferachse ohne Abstandsänderung bewegt werden.

2. Verfahren nach Anspruch 1 oder 2,
wobei der Ultraschallsender (21) auch als Ultraschallempfänger (23) ausgelegt wird, wobei der Ultraschallsender (21) in einem zusätzlichen Prüfschritt ein Impuls-Signal (31) sendet und dessen Echo (33) empfängt.

3. Verfahren nach einem der vorhergehenden Ansprüche,
wobei der Ultraschallempfänger (23) auch als Ultraschallsender (21) ausgelegt wird, wobei der Ultraschallempfänger (23) in einem zusätzlichen Prüfschritt ein Impuls-Signal (31) sendet und dessen Echo (33) empfängt.

4. Verfahren nach einem der vorhergehenden Ansprüche,
wobei der Ultraschallempfänger (23) als ein Gruppenstrahler ausgebildet ist, so daß verschiedene Empfangswinkel (a,b) für das Ultraschallsignal (25) elektronisch einstellbar sind.

5. Verfahren nach einem der vorhergehenden Ansprüche,
wobei der Ultraschallsender (21) als ein Gruppenstrahler ausgebildet ist, so daß verschiedene Einstrahlwinkel (a,b) für das Ultraschallsignal (25) elektronisch einstellbar sind.

6. Verfahren nach einem der vorhergehenden Ansprüche,
wobei bei einer Ortung eines Materialfehlers (16) in der Schweißnaht (11) an einer Fehlerposition (F) über ein Fehlersignal, wobei die Fehlerposition (F) durch die bei der Ortung vorliegenden Meßpositionen (M1,M3) des Ultraschallsenders (21) und des Ultraschallempfängers (23) charakterisiert ist, der Ultraschallsender (21) oder der Ultraschallempfänger (23) um die jeweilige Meßposition (M1,M3) bewegt und anschließend aus der sich durch das Verfahren folgenden Änderung des Fehlersignals eine Orientierung des Materialfehlers (16) bestimmt wird.

7. Verfahren nach einem der vorhergehenden Ansprüche,
wobei der erste Läuferteil (7) aus einem anderen Material besteht als der zweite Läuferteil (9).

8. Verfahren nach einem der vorhergehenden Ansprüche,
wobei die Schweißnaht (11) eine Engspaltschweißnaht ist.

9. Verfahren nach einem der vorhergehenden Ansprüche,
wobei der Turbinenläufer (1) als ein Dampfturbinenläufer ausgebildet ist.

## Claims

1. Ultrasonic testing method for a weld seam (11) of a welded turbine rotor (1), directed along a rotor axis (3) and having a rotor surface (5), in the case of which method the weld seam (11) welds a first rotor part (7) to a second rotor part (9), in a fashion perpendicular to the rotor axis (3), along the weld surface (13), extending annularly around the rotor, with the inclusion of a cavity (15), in which an ultrasonic transmitter (21) and an ultrasonic receiver (23) are arranged on the rotor surface (5) in the region of the first rotor part (7) in a fashion symmetrical to the rotor axis (3), and subsequently an ultrasonic signal (25) is transmitted by the ultrasonic transmitter (21) to the weld seam (11) and reflected to the ultrasonic receiver (23) by a material defect (16) present there, the measuring positions of the ultrasonic transmitter (21) and ultrasonic receiver (23) defining, together with the point of sound irradiation on the weld seam (11), a plane that runs parallel to the rotor axis (3) and therefore perpendicular to the weld seam (11), and in which, while preserving their symmetrical arrangement in relation to the rotor axis (3), the ultrasonic transmitter (21) and the ultrasonic receiver (23) are moved on the rotor surface (5) such that the entire weld seam (11) is exposed step by step to the ultrasonic signal (25), the ultrasonic transmitter (21) and the ultrasonic receiver (23) being moved in the circumferential direction toward one another or away from one another, being moved in the circumferential direction while maintaining their spacing or being moved along the rotor axis without changes in spacing.

2. Method according to Claim 1, in which the ultrasonic transmitter (21) is also designed as an ultrasonic receiver (23), the ultrasonic transmitter (21) transmitting a pulse signal (31) in an additional testing step, and receiving the echo (33) thereof.

3. Method according to either of the preceding claims, in which the ultrasonic receiver (23) is also designed as an ultrasonic transmitter (21), the ultrasonic receiver (23) transmitting a pulse signal (31) in an additional testing step, and receiving the echo (33) thereof.

4. Method according to one of the preceding claims, in which the ultrasonic receiver (23) is designed as a transducer array such that different receiving angles (a, b) can be set electronically for the ultrasonic signal (25).

5. Method according to one of the preceding claims, in which the ultrasonic transmitter (21) is designed as a transducer array such that different irradiation angles (a, b) can be set electronically for the ultrasonic signal (25).

6. Method according to one of the preceding claims, in which, when locating a material defect (16) in the weld seam (11) at a defect position (F) via an error signal, the defect position (F) being **characterized by** the measured positions (M1, M3), occurring during the locating, of the ultrasonic transmitter (21) and of the ultrasonic receiver (23), the ultrasonic transmitter (21) or the ultrasonic receiver (23) is moved around the respective measuring position (M1, M3), and subsequently an orientation of the material defect (16) is determined from the change in the error signal resulting from the method.

7. Method according to one of the preceding claims, in which the first rotor part (7) consists of a different material to the second rotor part (9).

8. Method according to one of the preceding claims, in which the weld seam (11) is a narrow-gap weld seam.

9. Method according to one of the preceding claims, in which the turbine rotor (1) is designed as a steam turbine rotor.

## Revendications

1. Procédé de contrôle par ultrasons d'un cordon ( 11 ) de soudure le long d'un rotor ( 1 ) de turbine soudé, dirigé le long d'un axe ( 3 ) de rotor et ayant une surface ( 5 ) de rotor, dans lequel on soude par le cordon ( 11 ) de soudure perpendiculairement à l'axe ( 3 ) du rotor une première partie ( 7 ) du rotor à une deuxième partie ( 9 ) du rotor le long d'une surface ( 13 ) de soudure s'étendant annulairement autour du rotor avec inclusion d'un espace ( 15 ) creux, dans lequel
on dispose un émetteur ( 21 ) d'ultrasons et un récepteur ( 23 ) d'ultrasons à la surface ( 5 ) du rotor dans la zone de la première partie ( 7 ) du rotor symétriquement par rapport à l'axe ( 3 ) du rotor et ensuite on émet un signal ( 25 ) d'ultrasons de l'émetteur ( 21 ) d'ultrasons au cordon ( 11 ) de soudure et on le réfléchit, par un défaut ( 16 ) de matériau qui est présent, au récepteur ( 23 ) d'ultrasons, dans lequel
les positions de mesure de l'émetteur ( 21 ) d'ultrasons et du récepteur ( 23 ) d'ultrasons définissent ensemble avec le point d'incidence des ultrasons sur le cordon ( 11 ) de soudure, un plan qui est parallèle à l'axe ( 3 ) du rotor et donc perpendiculaire au cordon (11) de soudure, dans lequel on déplace l'émetteur ( 21 ) d'ultrasons et le récepteur ( 23 ) d'ultrasons en conservant leur symétrie par rapport à l'axe ( 3 ) du rotor sur la surface ( 5 ) du rotor de façon à soumettre pas à pas tout le cordon ( 11 ) de soudure au signal ( 25 ) d'ultrasons, l'émetteur ( 21 ) d'ultra sons et le récepteur ( 23 ) d'ultrasons étant déplacés dans la direction périphérique en se rapprochant ou en s'éloignant, étant déplacés dans la direction périphérique en conservant leur distance ou étant déplacés le long de l'axe du rotor sans modification de distance.

2. Procédé suivant la revendication 1,
dans lequel l'émetteur ( 21 ) d'ultrasons est conçu aussi en récepteur ( 23 ) d'ultrasons, l'émetteur ( 21 ) d'ultrasons envoyant dans un stade de contrôle supplémentaire un signal ( 31 ) par impulsion et en recevant l'écho ( 33 ).

3. Procédé suivant l'une des revendications précédentes,
dans lequel le récepteur ( 23 ) d'ultrasons est conçu aussi en émetteur ( 21 ) d'ultrasons, le récepteur ( 23 ) d'ultrasons émettant dans un stade de contrôle supplémentaire un signal ( 31 ) par impulsion et en recevant l'écho ( 33 ).

4. Procédé suivant l'une des revendications précédentes,
dans lequel le récepteur ( 23 ) d'ultrasons est constitué en réseau d'antennes de manière à pouvoir régler électroniquement des angles ( a, b ) de réception différents du signal ( 25 ) d'ultrasons.

5. Procédé suivant l'une des revendications précédentes,
dans lequel l'émetteur ( 21 ) d'ultrasons est constitué en réseau d'antennes de manière à pouvoir régler électroniquement les angles ( a, b ) d'incidence différents du signal ( 25 ) d'ultrasons.

6. Procédé suivant l'une des revendications précédentes,
dans lequel, lors d'une localisation par un signal de défaut d'un défaut ( 16 ) de matériau dans le cordon ( 11 ) de soudure en une position ( F ) de défaut, la position ( F ) de défaut étant **caractérisée par** les positions ( M1, M3 ) de mesure, présentes lors de la localisation, de l'émetteur ( 21 ) d'ultrasons et du récepteur ( 23 ) d'ultrasons, on déplace l'émetteur ( 21 ) d'ultrasons ou le récepteur ( 23 ) d'ultrasons autour de la position ( M1, M3 ) de mesure respective et ensuite on détermine une orientation du défaut ( 16) de matériau par la modification du signal de défaut faisant suite au déplacement.

7. Procédé suivant l'une des revendications précédentes,
dans lequel la première partie ( 7 ) de rotor est en un matériau autre que la deuxième partie ( 9 ) de rotor.

8. Procédé suivant l'une des revendications précédentes,
dans lequel le cordon ( 11 ) de soudure est un cordon de soudure à intervalle étroit.

9. Procédé suivant l'une des revendications précédentes,
dans lequel le rotor ( 1 ) de turbine est constitué en rotor de turbine à vapeur.
